# FASCICULE DE BREVET EUROPEEN

(11) **EP 0 597 738 B1**
(45) Date de publication et mention de la délivrance du brevet: **23.07.1997**
(21) Numéro de dépôt: 93402434.0
(22) Date de dépôt: 05.10.1993
(51) Int. Cl.: C04B 35/10, C01F 7/02

(54) **Procédé de préparation d'alumine stabilisée par du lanthane**
Verfahren zur Herstellung von durch Lanthan stabilisiertem Aluminiumoxid
Process for the preparation of alumina stabilized by lanthan

(30) Priorité: 12.11.1992 FR 9213606
(43) Date de publication de la demande: 18.05.1994
(73) Titulaire: RHONE-POULENC CHIMIE, 92408 Courbevoie Cédex (FR)
(72) Inventeur: Chopin, Thierry, F-93200 Saint-Denis (FR); La Loarer, Jean-Luc, F-30340 Salindres (FR)
(74) Mandataire: Dubruc, Philippe

(56) Documents cités:
- GB-A- 1 568 862
- US-A- 4 061 594
- PATENT ABSTRACTS OF JAPAN vol. 10, no. 94 (C-338)(2151) 11 Avril 1986 &
- PATENT ABSTRACTS OF JAPAN vol. 10, no. 107 (C-341)(2164) 22 Avril 1986 &

## Description

La présente invention concerne un procéde de préparation d'alumine stabilisée par du lanthane, conservant une surface spécifique élevée à haute température et son application comme support de catalyseur.

Il est bien connu d'utiliser, notamment pour le traitement des gaz d'échappement des moteurs à combustion interne, des catalyseurs dont le support est à base d'alumine.

Il est également bien connu que l'efficacité d'un catalyseur est généralement d'autant plus grande que la surface de contact entre le catalyseur et les réactifs est grande. Pour ce faire, il est nécessaire que le catalyseur soit maintenu en un état le plus divisé possible, c'est-à-dire que les particules catalytiques solides qui le composent soient aussi petites et individualisées que possible. Le rôle fondamental du support est donc de maintenir les particules de catalyseur ou cristallites au contact des réactifs, à l'état le plus divisé possible.

Compte tenu des conditions sévères auxquelles les catalyseurs de traitement des gaz d'échappement sont soumis, leurs supports, sur lesquels peuvent être déposés des métaux précieux, doivent présenter une excellente stabilité thermique, c'est-à-dire conserver une surface spécifique élevée à haute température, en particulier jusqu'à 1200°C.

L'alumine employée traditionnellement comme support de tels catalyseurs subit une transformation de phase irréversible en α-alumine sous l'effet de températures élevées (notamment supérieures ou égales à 1000°C), ce qui a pour conséquence de réduire sa surface spécifique à moins de 10 m²/g et de provoquer le frittage de la phase catalytique le catalyseur est alors détérioré et perd ainsi une grande partie de son efficacité.

Il a déjà été proposé d'ajouter à l'alumine divers composés destinés à améliorer ses qualités au vieillissement thermique. Ainsi, il est connu d'imprégner un support de catalyseur à base d'alumine préformée et calcinée avec une solution de nitrate de métal de terre rare (US-A-4061594) ou avec une solution d'un composé du silicium. Néanmoins, les alumines obtenues présentent à haute température une surface spécifique encore insuffisante, dont la valeur diminue de plus de manière très prononcée lorsque la durée du traitement thermique augmente.

La demanderesse a mis au point un procédé de preparation d'alumine stabilisée par du lanthane conservant une surface spécifique élevée à haute température, le lanthane étant réparti avantageusement de manière homogène dans l'alumine, ainsi qu'un procédé de préparation d'une telle alumine stabilisée.

Le lanthane se trouve dans l'alumine de préférence sous forme d'oxyde.

La teneur en lanthane de l'alumine stabilisée conforme à l'invention, exprimée en poids d'oxyde de lanthane par rapport à l'alumine stabilisée, est avantageusement comprise entre 1,5 et 15 %, de préférence entre 2,5 et 11 %, de manière encore plus préférée entre 3,0 et 7,5 %.

Le procédé conforme à l'invention présente, permit la préparation d'alumine qui après calcination à 1200°C pendant 4 heures (en atmosphère ambiante), presente une surface spécifique (mesurée par la méthode B.E.T.) supérieure à 40 m²/g (par exemple comprise entre 40 et 75 m²/g), de préférence supérieure à 45 m²/g (par exemple comprise entre 45 et 65 m²/g) et, de manière encore plus préférée, supérieure à 50 m²/g (par exemple comprise entre 50 et 60 m²/g).

D'une manière avantageuse, cette alumine conforme à l'invention présente une surface spécifique dont la valeur mesurée (par la méthode B.E.T.) après calcination à 1200°C pendant 24 heures (en atmosphère ambiante) est en général encore égale à plus de 50 %, de préférence à plus de 55 % et, de manière encore plus préférée, à plus de 60 % de la valeur mesurée (par la méthode B.E.T.) après calcination à 1200°C pendant 4 heures (en atmosphère ambiante).

Cette alumine présente ainsi une très bonne stabilité thermique.

Il est à noter que, selon une variante de l'invention, le lanthane peut être utilisé avec du néodyme.

Le néodyme est alors réparti de préférence de manière homogène dans l'alumine, dans laquelle il se retrouve en général sous forme d'oxyde.

La quantité de néodyme alors présent dans l'alumine stabilisée conforme à l'invention, exprimée en poids d'oxyde de néodyme par rapport au poids d'oxyde de lanthane, est habituellement comprise entre 8 et 40 %, par exemple entre 12 et 30 %.

L'invention a également pour but de fournir un procédé de préparation de l'alumine décrite ci-dessus, l'agent stabilisant étant introduit lors d'une étape bien particulière dudit procédé.

Un autre objet de l'invention réside ainsi dans un procédé de préparation de ladite alumine, à partir d'une poudre d'alumine issue de la déshydratation rapide d'un hydroxyde ou d'un oxyhydroxyde d'aluminium, dans lequel ladite poudre est soumise à une opération de mûrissement en présence d'au moins un agent stabilisant constitué par au moins un composé du lanthane (éventuellement en mélange avec un composé du néodyme), puis à un traitement thermique.

L'opération de mûrissement ou dite également de maturation consiste à réhydrater la poudre d'alumine mise en oeuvre, la phase cristalline appelée boehmite se développant. Cette réhydratation est un processus de dissolution-reprécipitation. Elle s'effectue de préférence par mise en suspension de la poudre d'alumine dans de l'eau à une concentration habituellement comprise entre 50 et 600 g/l, par exemple entre 200 et 350 g/l.

Selon l'une des caractéristiques principales du procédé selon l'invention, cette réhydratation s'effectue en présence d'au moins un agent stabilisant constitué par un composé du lanthane, éventuellement en mélange avec un composé du néodyme.

Comme composé du lanthane, on peut utiliser un sel de lanthane, notamment un chlorure, un nitrate et/ou un acétate de lanthane, en solution aqueuse.

L'utilisation de nitrate de lanthane est préférée.

La quantité de composé du lanthane ajoutée est telle qu'elle correspond à une quantité avantageusement comprise entre 1,5 et 15 %, de préférence entre 2,5 et 11 %, de manière encore plus préférée entre 3,5 et 7,5 %, en poids d'oxyde de lanthane par rapport au poids total de l'alumine stabilisée finie.

De même, comme composé du néodyme, on peut utiliser un sel de néodyme, notamment un chlorure, un nitrate et/ou un acétate de néodyme, en solution aqueuse, l'emploi de nitrate de néodyme étant préférée.

Un mélange de sels de lanthane et de néodyme en solution aqueuse peut être employé.

La quantité de composé du néodyme ajoutée est telle qu'elle correspond à une quantité en général comprise entre 8 et 40 %, par exemple entre 12 et 30 %, exprimée en poids d'oxyde de néodyme par rapport au poids d'oxyde de lanthane.

Le pH de la suspension est, après introduction de l'agent stabilisant, ajusté à une valeur de préférence comprise entre 8 et 12, par exemple entre 9 et 11, par ajout d'une base quelconque, généralement une base faible, par exemple de l'ammoniaque.

L'opération de mûrissement s'effectue à une température avantageusement comprise entre 70 et 110°C, de préférence aux environs de 100°C (par exemple entre 95 et 100°C).

La durée du mûrissement est habituellement comprise entre 1 et 48 heures. Lorsque l'opération de mûrissement s'effectue à une température ne dépassant pas 100°C, sa durée est par exemple comprise entre 10 et 48 heures, de préférence entre 20 et 30 heures. Lorsqu'elle s'effectue à une température supérieure à 100°C, on emploie généralement un autoclave et la durée du mûrissement peut alors n'être comprise qu'entre 1 et 6 heures, de préférence entre 1 et 4 heures.

L'alumine obtenue est au moins en partie sous forme de boehmite (ou pseudo-boehmite) ; ainsi, son taux de boehmite (ou pseudo-boehmite) est habituellement compris entre 5 et 35 % en poids, de préférence entre 10 et 30 % en poids.

Cette alumine est ensuite séparée par toute technique connue de séparation liquide/solide, par exemple par filtration.

L'opération de séparation liquide/solide peut comporter, si nécessaire, un traitement de purification permettant d'éliminer de manière efficace la soude (qui peut être présente dans la poudre d'alumine de départ) et/ou d'autres impuretés, notamment des impuretés provenant éventuellement de l'agent stabilisant mis en oeuvre.

Il est ainsi possible de préparer une alumine stabilisée ayant un degré de pureté élevé directement à partir de produits contenant des impuretés pour l'application envisagée, ce qui n'est généralement pas le cas des méthodes de stabilisation d'alumine de l'art antérieur.

Le traitement thermique est habituellement effectué à une température comprise entre 100 et 700°C, pendant une période de temps suffisante pour enlever l'eau non liée chimiquement à l'alumine, par exemple entre 2 et 32 heures.

Ce traitement thermique peut consister en un séchage, éventuellement suivi d'une calcination.

Le séchage est effectué à une température généralement comprise entre 100 et 250°C, de préférence entre 100 et 200°C, pendant une durée le plus souvent comprise entre 2 et 24 heures.

La calcination est mise en oeuvre à une température généralement comprise entre 250 et 700°C, de préférence entre 350 et 600°C, pendant une durée le plus souvent comprise entre 1 et 8 heures.

La poudre d'alumine de départ mise en oeuvre dans le procédé de l'invention est issue de la déshydratation rapide d'au moins un hydroxyde d'aluminium tel que la bayerite, l'hydrargillite ou gibbsite, la nordstrandite et/ou d'au moins un oxyhydroxyde d'aluminium tel que la boehmite et le diaspore.

Cette déshydratation est opérée, dans n'importe quel appareillage approprié, à l'aide d'un courant de gaz chauds permettant d'éliminer et entrainer très rapidement l'eau évaporée. La température d'entrée desdits gaz dans l'appareillage varie généralemenf de 400 à 1200°C environ, par exemple de 800 à 1200°C environ, avec un temps de contact entre l'hydroxyde (ou l'oxyhydroxyde) et lesdits gaz chauds habituellement de l'ordre d'une fraction de seconde à 4 ou 5 secondes.

L'alumine issue de cette déshydratation peut éventuellement subir un traitement pour éliminer au moins une partie des alcalins présents.

La surface spécifique, mesurée par la méthode B.E.T., de l'alumine issue de la déshydratation rapide d'hydroxyde(s) et/ou d'oxyhydroxyde(s) d'aluminium est généralement comprise entre environ 50 et 450 m²/g, le diamètre des particules variant habituellement entre 0,1 et 300 µm, de préférence entre 1 et 120 µm.

Cette alumine présente le plus souvent un volume poreux de l'ordre de 0,10 à 0,50 cm³/g, les pores ayant des dimensions généralement inférieures à 50 nm.

Selon un mode de réalisation particulier de l'invention, cette alumine de départ provient de la déshydratation rapide de l'hydrate de Bayer (hydrargillite) qui est un hydroxyde d'aluminium industriel facilement accessible et très bon marché. Une telle alumine est bien connue de l'homme du métier et est notamment décrite dans le brevet français n° 1108011.

Le procédé selon l'invention permet ainsi l'obtention d'une alumine ayant une excellente stabilité thermique, c'est-à-dire conservant une surface spécifique élevée à haute température : sa surface spécifique (mesurée par la méthode B.E.T.), après calcination à 1200°C pendant 4 heures (en atmosphère ambiante), est supérieure à 40 m²/g (par exemple comprise entre 40 et 75 m²/g), de préférence supérieure à 45 m²/g (par exemple comprise entre 45 et 65 m²/g) et, de manière encore plus préférée, supérieure à 50 m²/g (par exemple comprise entre 50 et 60 m²/g).

D'une manière avantageuse, le procédé selon l'invention permet l'obtention d'une alumine qui, en outre, présente une surface spécifique dont la valeur mesurée (par la méthode B.E.T.) après calcination à 1200°C pendant 24 heures (en atmosphère ambiante) est encore égale à plus de 50 %, de préférence à plus de 55 % et, de manière encore plus préférée, à plus de 60 % de la valeur mesurée (par la méthode B.E.T.) après calcination à 1200°C pendant 4 heures (en atmosphère ambiante), ce qui n'est pas le cas des alumines dopées par imprégnation à l'aide d'une solution de sel de métal de terre rare.

L'alumine préparée selon l'invention possède ainsi une stabilité thermique supérieure à celle des alumines dopées par imprégnation à l'aide d'une solution de sel de métal de terre rare.

Le lanthane est réparti avantageusement de manière homogène dans l'alumine, dans laquelle il se trouve de préférence sous forme d'oxyde.

L'alumine stabilisée selon l'invention peut être employée comme support de catalyseur. Elle est notamment utilisée comme support de catalyseur pour le traitement des gaz d'échappement des moteurs à combustion interne : elle peut être mise en oeuvre soit sous forme de billes, soit sous forme d'une couche poreuse de revêtement ("washcoat") que l'on dépose sur un support monolithique en céramique ou en métal; la phase active du catalyseur peut être constituée de métaux précieux ; on peut utiliser notamment la phase active décrite dans le brevet US-A-4 378 307.

L'alumine stabilisée selon l'invention peut être également employée comme catalyseur, notamment comme catalyseur de conversion d'hydrocarbures. Elle est par exemple utilisée comme catalyseur de FCC (craquage catalytique en lit fluide).

Les exemples suivants illustrent l'invention sans toutefois en limiter la portée.

### EXEMPLE 1 (comparatif)

On utilise comme matière première une poudre d'alumine, de surface spécifique d'environ 390 m²/g, issue de la déshydratation rapide d'hydrargillite.

Cette poudre d'alumine est imprégnée à 5 % en poids d'oxyde de lanthane avec une solution aqueuse de nitrate de lanthane, puis séchée à 120°C pendant 12 heures.

L'alumine ainsi obtenue présente, après calcination à 1200°C pendant 4 heures (en atmosphère ambiante), une surface spécifique de 35 m²/g et, après calcination à 1200°C pendant 24 heures (en atmosphère ambiante), une surface spécifique de 10 m²/g seulement.

### EXEMPLE 2 (conforme à l'invention)

On utilise la même matière première que dans l'exemple 1.

Cette poudre d'alumine est mûrie, c'est-à-dire réhydratée, par mise en suspension dans de l'eau à une concentration de 250 g/l pendant 24 heures à 98°C, une solution aqueuse de nitrate de lanthane ayant été ajoutée en début d'opération en une quantité telle qu'elle correspond à une quantité de 5 % de lanthane, exprimée en poids d'oxyde de lanthane par rapport au poids total de l'alumine stabilisée finie. Le pH est ajusté à environ 10 par addition d'ammoniaque en début d'opération.

A l'issue du traitement, on effectue une séparation liquide/solide et on séche alors l'alumine à 120°C pendant 12 heures.

L'alumine ainsi obtenue présente, après calcination à 1200°C pendant 4 heures (en atmosphère ambiante), une surface spécifique de 52 m²/g et, après calcination à 1200°C pendant 24 heures (en atmosphère ambiante), une surface spécifique de 28 m²/g.

### EXEMPLE 3 (conforme à l'invention)

On opère comme dans l'exemple 2, à cette différence près que la quantité de solution aqueuse de nitrate de lanthane ajouté est telle qu'elle correspond à une quantité de 10 % de lanthane, exprimée en poids d'oxyde de lanthane par rapport au poids total de l'alumine stabilisée finie.

L'alumine obtenue présente, après calcination à 1200°C pendant 4 heures (en atmosphère ambiante), une surface spécifique de 47 m²/g et, après calcination à 1200°C pendant 24 heures (en atmosphère ambiante), une surface spécifique de 26 m²/g.

### EXEMPLE 4 (conforme à l'invention)

On opère comme dans l'exemple 2, à cette différence près qu'on utilise comme matière première une poudre d'alumine, issue de la déshydratation rapide d'hydrargillite, ayant une surface spécifique d'environ 360 m²/g.

L'alumine obtenue présente, après calcination à 1200°C pendant 4 heures (en atmosphère ambiante), une surface spécifique de 46 m²/g et, après calcination à 1200°C pendant 24 heures (en atmosphère ambiante), une surface spécifique de 25 m²/g.

## Revendications

1. Procédé de préparation d'une alumine stabilisée par du lanthane, à partir d'une poudre d'alumine issue de la déshydratation rapide d'un hydroxyde ou d'un oxyhydroxyde d'aluminium, dans lequel ladite poudre est soumise à une opération de mûrissement, puis à un traitement thermique à une température comprise entre 100 et 700 °C, caractérisé en ce que l'opération de mûrissement est effectuée par suspension dans l'eau de la poudre d'alumine en présence d'au moins un agent stabilisant constitué par un composé du lanthane et, éventuellement, un composé du néodyme.

2. Procédé selon la revendication 1, caractérisé en ce que ledit composé du lanthane est un sel de lanthane.

3. Procédé selon la revendication 2, caractérisé en ce que ledit composé du lanthane est un sel de lanthane en solution aqueuse.

4. Procédé selon l'une des revendications 2 et 3, caractérisé en ce que ledit sel est un chlorure, un nitrate ou un acétate de lanthane.

5. Procédé selon l'une des revendications 2 à 4, caractérisé en ce que ledit sel est un nitrate de lanthane.

6. Procédé selon l'une des revendications 1 à 1, caractérisé en ce que l'opération de mûrissement s'effectue par mise en suspension de ladite poudre d'alumine dans de l'eau, à une température de 70 à 110°C.

7. Procédé selon la revendication 6, caractérisé en ce que l'opération de mûrissement s'effectue entre 95 et 100 °C.

8. Procédé selon l'une quelconque des revendications 1 à 7, caractérisé en ce que le pH de la suspension est, après introduction de l'agent stabilisant, ajusté à une valeur comprise entre 8 et 12.

9. Procédé selon l'une quelconque des revendications 1 à 8, caractérisé en ce que le traitement thermique consiste en un séchage à une température comprise entre 100 et 250°C.

10. Procédé selon l'une quelconque des revendications 1 à 8, caractérisé en ce que ledit traitement thermique consiste en un séchage à une température comprise entre 100 et 250 °C, suivi d'une calcination à une température comprise entre 250 et 700 °C.

11. Procédé selon l'une des revendications 1 à 10, caractérisé en ce que la poudre d'alumine de départ est issue de la déshydratation rapide d'hydrargillite.

12. Procédé selon l'une des revendications 1 à 11, caractérisé en ce que ladite poudre d'alumine de départ est préalablement soumise à un traitement pour éliminer au moins une partie des alcalins présents.

13. Utilisation d'une alumine susceptible d'être obtenue par un procédé selon l'une des revendications 1 à 12 comme support de catalyseur.

14. Utilisation selon la revendication 13 comme support de catalyseur de traitement des gaz d'échappement des moteurs à combustion interne.

15. Utilisation d'une alumine stabilisée susceptible d'être obtenue par un procédé selon l'une des revendications 1 à 14 comme catalyseur.

16. Utilisation selon la revendication 15 comme catalyseur de FCC.

## Claims

1. Process for the preparation of a lanthanum-stabilized alumina, from an alumina powder obtained by rapid dehydration of an aluminium hydroxide or oxyhydroxide, in which the said powder is subjected to a maturation operation followed by a heat treatment at a temperature of between 100 and 700°C, characterized in that the maturation operation is carried out by suspend-ing the alumina powder in water in the presence of at least one stabilizer consisting of a lanthanum compound and optionally a neodymium compound.

2. Process according to Claim 1, characterized in that the said lanthanum compound is a lanthanum salt.

3. Process according to Claim 2, characterized in that the said lanthanum compound is a lanthanum salt in aqueous solution.

4. Process according to either of Claims 2 and 3, characterized in that the said salt is a lanthanum chloride, nitrate or acetate.

5. Process according to one of Claims 2 to 4, characterized in that the said salt is a lanthanum nitrate.

6. Process according to one of Claims 1 to 5, characterized in that the maturation operation takes place by suspending the said alumina powder in water at a temperature of 70 to 110°C.

7. Process according to Claim 6, characterized in that the maturation operation takes place between 95 and 100°C.

8. Process according to any one of Claims 1 to 7, characterized in that after introduction of the stabilizer, the pH of the suspension is adjusted to a value of between 8 and 12.

9. Process according to any one of Claims 1 to 8, characterized in that the heat treatment consists of drying at a temperature of between 100 and 250°C.

10. Process according to any one of Claims 1 to 8, characterized in that the said heat treatment consists of drying at a temperature of between 100 and 250°C followed by calcination at a temperature of between 250 and 700°C.

11. Process according to one of Claims 1 to 10, characterized in that the alumina starting powder is obtained by rapid dehydration of hydrargillite.

12. Process according to one of Claims 1 to 11, characterized in that the said alumina starting powder is subjected beforehand to a treatment to remove at least some of the alkalis present.

13. Use of an alumina which can be obtained by a process according to one of Claims 1 to 12, as a catalyst support.

14. Use according to Claim 13, as a support for a catalyst for the treatment of the exhaust gases from internal combustion engines.

15. Use of a stabilized alumina which can be obtained by a process according to one of Claims 1 to 13, as a catalyst.

16. Use according to Claim 15, as an FCC catalyst.

## Patentansprüche

1. Verfahren zur Herstellung von durch Lanthan stabilisiertem Aluminiumoxid, ausgehend von einem Aluminiumoxid-Pulver, das aus der schnellen Dehydratisierung eines Hydroxids oder eines Oxyhydroxids von Aluminium stammt, bei dem das genannte Pulver einer Reifungsoperation und anschließend einer thermischen Behandlung bei einer Temperatur zwischen 100 °C und 700 °C unterzogen wird, dadurch gekennzeichnet, daß die Reifungsoperation durch Suspendieren des Aluminiumoxid-Pulvers in Wasser in Anwesenheit von mindestens einem stabilisierenden Mittel durchgeführt wird, das aus einer Verbindung von Lanthan und gegebenenfalls aus einer Verbindung von Neodym besteht.

2. Verfahren nach Anspruch 1, dadurch gekennzeichnet, daß die genannte Verbindung von Lanthan ein Lanthansalz ist.

3. Verfahren nach Anspruch 2, dadurch gekennzeichnet, daß die genannte Verbindung von Lanthan ein Lanthansalz in wäßriger Lösung ist.

4. Verfahren nach einem der Ansprüche 2 und 3, dadurch gekennzeichnet, daß das genannte Salz ein Chlorid, ein Nitrat oder ein Acetat von Lanthan ist.

5. Verfahren nach einem der Ansprüche 2 bis 4, dadurch gekennzeichnet, daß das genannte Salz ein Nitrat von Lanthan ist.

6. Verfahren nach einem der Ansprüche 1 bis 5, dadurch gekennzeichnet, daß die Reifungsoperation durch Suspendieren des genannten Aluminiumoxid-Pulvers in Wasser bei einer Temperatur von 70 °C bin 110 °C erfolgt.

7. Verfahren nach Anspruch 6, dadurch gekennzeichnet, daß die Reifungsoperation zwischen 95 °C und 100 °C erfolgt.

8. Verfahren nach irgendeinem der Ansprüche 1 bis 7, dadurch gekennzeichnet, daß der pH-Wert der Suspension nach dem Eintragen des stabilisierenden Mittels auf einen Wert zwischen 8 und 12 eingestellt wird.

9. Verfahren nach irgendeinem der Ansprüche 1 bis 8, dadurch gekennzeichnet, daß die thermische Behandlung in einer Trocknung bei einer Temperatur zwischen 100 °C und 250 °C besteht.

10. Verfahren nach irgendeinem der Ansprüche 1 bis 8, dadurch gekennzeichnet, daß die genannte thermische Behandlung in einer Trocknung bei einer Temperatur zwischen 100 °C und 250 °C, gefolgt von einer Kalzinierung bei einer Temperatur zwischen 250 °C und 700°C, besteht.

11. Verfahren nach einem der Ansprüche 1 bis 10, dadurch gekennzeichnet, daß das eingesetzte Aluminiumoxid-Pulver aus der schnellen Dehydratisierung von Hydrargillit stammt.

12. Verfahren nach einem der Ansprüche 1 bis 11, dadurch gekennzeichnet, daß das genannte, eingesetzte Aluminiumoxid-Pulver zuvor einer Behandlung zur mindestens teilweisen Entfernung der anwesenden Alkali unterzogen wird.

13. Verwendung eines Aluminiumoxids, das geeignet ist, durch ein Verfahren nach einem der Ansprüche 1 bis 12 erhalten zu werden, als Katalysatorträger.

14. Verwendung nach Anspruch 13 als Träger für Katalysatoren zur Behandlung von Auspuffgasen der Motoren mit innerer Verbrennung.

15. Verwendung eines stabilisierten Aluminiumoxids, das geeignet ist, durch ein Verfahren nach einem der Ansprüche 1 bis 13 erhalten zu werden, als Katalysator.

16. Verwendung nach Anspruch 15 als Katalysator von FCC.
